# EUROPEAN PATENT APPLICATION

(11) **EP 2 899 654 A1**
(43) Date of publication of application: **29.07.2015**
(21) Application number: 14152899.2
(22) Date of filing: 28.01.2014
(51) Int. Cl.: G06F 17/50

(54) **Method, system and computer program product for characterizing the variability of an integrated circuit design**

(71) Applicant: IMEC VZW, 3001 Leuven (BE)
(72) Inventor: Dobrovolny, Petr, 3001 Leuven (BE); Christie, Philip, 3001 Leuven (BE)
(74) Representative: Sarlet, Steven Renaat Irène

(57) **Abstract**

The present disclosure provides method, system and computer program product for characterizing variability of an integrated circuit design in a target semiconductor manufacturing process. A timing report of the integrated circuit design is provided from an existing description of the integrated circuit design. The existing description results from synthesis of the integrated circuit design in the target semiconductor manufacturing process. A set of relevant standard cells is determined in one or more data paths of the existing integrated circuit design on the basis of the timing report. The relevant standard cells are statistically characterised, thereby generating for each relevant standard cell a first statistically relevant number N of variants of its cell netlist. The timing report of the integrated circuit design is recalculated at least a second statistically relevant number M times, wherein these variants are reused.

## Description

### Technical field

The present disclosure relates to a method, system and computer program product for characterizing the variability of a given integrated circuit design in a target semiconductor manufacturing process.

### Background art

The building blocks of digital processing systems are referred to as standard logic cells and represent basic logical functionality from which larger designs are constructed. Libraries of logic cells are supplied by foundries (and other 3^{rd} party vendors) and represent principal interface between process technology and digital design. Libraries can contain many hundreds of standard logic cells (hereafter referred to as 'standard cells' or 'cells') with different logical functionalities (AND, OR, Flip-Flop, etc.), drive strengths (1x, 2x, 4x, etc.) and numbers of input and output pins. The timing, power and area characteristics of these cells are contained within a library characterization file which is implemented as an open-source industry standard called the Liberty format. Each individual cell in the library characterization file has an entry which contains its area and tables for the timing and power characteristics of the different logic transitions that the cell can undergo. Typically, the cell delay and output transition time results are tabulated for a discrete range of output pin capacitive loads and input pin transition times, resulting in two-dimensional look-up tables. These library characterization files can be generated by specialized library characterization tools (such as Cadence Liberate) that perform a detailed analog circuit simulation of the cells using foundry-supplied device models (hereafter also referred to as 'transistor models').

For logic cells, manufacturing process variability has been traditionally modeled using the concept of process corners. These process corners represent the extreme manufacturing conditions of a product (usually defined as a 3 standard deviations from typical) at a given temperature and supply voltage. Each library characterization file is therefore defined by given Process corner, Voltage and Temperature (and is therefore known as a *PVT point).* For example, a Best Case (BC) library may be defined by a fast process corner with a drive current 3 standard deviations higher than typical, a supply voltage (*Vdd*) 10% above nominal and a temperature *T=0°C,* while a worst case (WC) library is defined by a slow process corner with a drive current 3 standard deviations lower than typical, *Vdd* 10% below nominal and *T=125°C.* Recently, there has been a large increase in the number of predefined libraries using additional *PVT* points. For example, the Maximum Leakage (ML) library is characterized for a fast corner, *Vdd* 10% above nominal and *T=125°*C*.*

The characterization of a cell for a given PVT point is traditionally carried out by the analog simulation of the circuit representing the cell, defined by the cell netlist. The cell netlist contains information on how the transistors are connected together, to implement the required cell functionality (for example, NAND), as well as information relating to the values of parasitic resistances and capacitances. In addition, each transistor instance in the netlist has associated with it a parameter which tells the simulation tool to select one of the pre-defined parameter sets in the device model corresponding to the selected process corner. Using this method, a device model parameter set corresponding to, for example, a slow corner may be passed to all transistors within the cell netlist during simulation.

Problems with this widely used method occur when there is also significant variation in the transistors within the cell - so-called local variability. This variability causes, in effect, a variation in the definition of the slow corner. The result is a definition of a worst-case device corner parameter set which is insufficient to uniquely define the variability between transistors within the cell and hence the timing and power variability of the cell.

To overcome this problem, foundries have created statistical device models which contain distributions of key model parameters as well as the predefined parameter for selected process corners. These statistical models are intended to be used in "Monte Carlo" circuit simulators. In these circuit simulators, multiple simulations of the cell netlist are performed but the device parameter set is not specified in advance. Instead, each time a transistor is simulated the simulation tool accesses the statistical device model and the model randomly selects device parameters from statistical parameter distributions contained within the statistical model. Statistical device models can be used to model both local and global process variability.

In the case of local process variability simulation, Monte Carlo circuit simulators randomly generate different model parameter sets for each transistor instance in the cell.

In the case of global process variability simulation, Monte Carlo circuit simulators randomly generate different model parameters for each transistor type in the cell. Specifically, this means that transistor instances of the same model type (n-channel device and p-channel device) have the same, randomly generated model parameter sets.

The result is that, for both local and global variability, each iteration of the Monte Carlo simulation process selects transistor model parameter sets from distributions of parameters, ultimately resulting in the generation of a distribution of timing results.

The downside is that the number of Monte Carlo simulation runs needed to capture the effects of local transistor variation on cell performance causes a very large increase in cell characterization time and also a large increase in the size of the liberty files used to represent cell performance. This is a major problem when characterizing advanced technology nodes which may have over 1,500 cells in a cell library. All current statistical characterization tools and the timing analysis tools that use statistical libraries as inputs make simplifying approximations. The large characterization time and the perception that statistical static timing analysis (SSTA) tools are inaccurate have led to their limited adoption by the design community.

### Summary of the disclosure

It is an aim of the present disclosure to provide a method, system and computer program product for characterizing the variability of a given integrated circuit design in a target semiconductor manufacturing process in fast and computationally efficient way.

These and other aims are achieved according to the disclosure with the subject-matter of the independent claims.

As used herein, with "target semiconductor manufacturing process" or "candidate semiconductor manufacturing process" is intended to mean any known or to be developed semiconductor device manufacturing process, integrated circuit manufacturing process, variants of so-called technology nodes (e.g. as defined in the International Technology Roadmap for Semiconductors) and process corners thereof, of which the process parameters are known from practical experience or simulation.

As used herein, with "standard cell library" is intended to mean a data collection containing definitions and parameters of standard cells and wire-load models for a semiconductor manufacturing process.

As used herein, with "path delay statistical distribution" is intended to mean a statistical distribution of the cumulative delay of a data path of an integrated circuit design.

As used herein, with a "statistically relevant number" is intended to mean a number which the skilled person knows to be sufficient to provide a suitable statistical distribution of the considered parameter or parameter set to be able to take local or global variability into account.

In an aspect of this disclosure, a method is provided for characterizing the variability of a given integrated circuit design in a target semiconductor manufacturing process, the method comprising:
a) providing a timing report of said integrated circuit design from an existing description of said integrated circuit design, said existing description resulting from synthesis of said integrated circuit design in said target semiconductor manufacturing process;
b) determining, on the basis of said timing report, a set of relevant standard cells in one or more data paths of said existing integrated circuit design, preferably one or more critical data paths (i.e. critical with respect to timing);
c) statistically characterising the relevant standard cells, preferably only the relevant standard cells in the critical data path(s), thereby generating for each relevant standard cell a first statistically relevant number N variants (i.e. a plurality of variants, e.g. 200) of its cell netlist;
d) recalculating said timing report of said integrated circuit design at least a second statistically relevant number M times, wherein, for each said recalculation, for each of the relevant standard cells a different one of said N variants of the respective cell netlist of that cell is selected.

So with the method of the disclosure it can be determined in steps a and b which are the standard cells of the integrated circuit design that have a critical impact on the timing of the circuit and, subsequently in steps c and d, statistical characterization and recalculation to take into account variability can be limited to only these standard cells. In step c, for each of the cells that have been determined as having a critical impact, N variants of the cell netlist of the respective cell are generated by a statistical characterization method, which may be chosen in function of or adapted to the variability conditions of the target manufacturing process.

In step d the N variants are used preferably at least once in different recalculation runs of the timing of the circuit. The result gives a statistical distribution of the timing of the circuit in which variability has been taken into account. By this method, the need for a complete statistical characterization of all the cells in the circuit can be avoided and a faster and more computationally efficient method can be achieved which gives nonetheless a result with sufficient accuracy.

In case of a global process variability simulation, M is preferably (approximately) equal to N, meaning that each variant is preferably used once, because there are only N possible instances of circuit design (represented by a timing report) for global variability.

In case of local process variability simulation, M is preferably a much larger than N, meaning that each variant is used multiple times, because there are many more possible timing report statistical recalculations due to the variation of transistor instances within the cells.

In embodiments of the method of this disclosure, for said statistical characterisation of step c use may be made of: a cell netlist of the respective standard cell that is being characterised, said cell netlist being taken from said timing report; transistor models of transistors in the respective standard cell, wherein parameters can be statistically varied to take variability into account; and predetermined variability conditions which are chosen in function of the target manufacturing process and which determine the statistic variation of the transistor parameters. Step c may thus comprise the statistical characterization of a cell for a given PVT point, which can be carried out by the analog simulation of the circuit representing the cell, defined by the cell netlist. The cell netlist contains information on how the transistors are connected together, to implement the required cell functionality (for example, NAND), as well as information relating to the values of parasitic resistances and capacitances.

In an embodiment, each transistor instance in the netlist may have associated with it a parameter which tells the simulation tool to select one of the pre-defined parameter sets in the device model corresponding to the selected process corner. Using this embodiment, a device model parameter set corresponding to, for example, a slow corner may be passed to all transistors within the cell netlist during simulation.

In another embodiment, for different transistors of the same standard cell, i.e. for each transistor instance in the netlist, different instances of the transistor parameters may be selected. Using this embodiment, the method of the disclosure may be enhanced in cases where is also significant variation in the transistors within the cell - so-called local variability. This local variability may cause, for example, a variation in the definition of the slow corner. With this embodiment, a result can be achieved which is a definition of a worst-case device corner parameter set which is sufficient to uniquely define the variability between transistors within the cell and hence the timing variability of the cell.

In embodiments of the method of this disclosure, the recalculation in step d may comprise, for each said recalculation, an initial step of creating a statistical instance of a standard cell library in an industry standard format, for example the Liberty format, wherein for each of the relevant standard cells the entry for the respective standard cell is modified on the basis of said selected one of said N variants of the respective cell netlist of that cell; and a subsequent step of applying said statistical instance of the standard cell library to a non-statistical static timing analysis tool. Using this embodiment has the advantage that existing tools for static timing analysis, which take the industry standard format libraries as input but are not arranged for statistical characterisation of circuits, can nevertheless be used for statistically characterizing an integrated circuit design to take variability into account.

### Brief description of the drawings

The disclosure will be further elucidated by means of the following description and the appended figures.
FIG. 1 shows a block diagram of a statistical logic cell characterization system according to an embodiment of the present disclosure.
FIG. 2 shows a flow diagram of a method of characterization of the variability of an integrated circuit according to an embodiment of the present disclosure.
FIG. 3 shows a statistical compact model file according to an embodiment of the present disclosure.
FIG. 4 shows a cell netlist according to an embodiment of the present disclosure.
FIG. 5 shows an informative file for model parameters according to an embodiment of the present disclosure.
FIG. 6 shows an informative file for instance parameters according to an embodiment of the present disclosure.
FIG. 7 shows statistical variants of cell netlist and associated statistical device models for the integrated circuit design according to an embodiment of the present disclosure.
FIG. 8 shows characterized cell library files generated by the method/system of the present disclosure according to an embodiment of the present disclosure.
Fig. 9 shows an overview of the conversion of a timing report into a functionalized timing trace using a "trace extraction tool" according to an embodiment of the present disclosure.
Fig. 10 shows the internal modules of a trace extraction tool according to an embodiment of the present disclosure.
Fig. 11 shows part of an exemplary 8-bit multiplier circuit design according to an embodiment of the present disclosure.
Fig. 12 shows an exemplary timing report for a critical path of the 8-bit multiplier circuit design according to an embodiment of the present disclosure.
Fig. 13 shows an exemplary trace implementation of the timing report for the critical path of the 8-bit multiplier circuit design according to an embodiment of the present disclosure.
Fig. 14 shows Probability Density Functions (PDF's) for a digital signal processing (DSP) block critical path delay computed using DSP block timing trace for 28nm HPM SS libraries at temperature=0c and Vdd = 0.81 V and Vdd = 0.72V.

### Detailed description of preferred embodiments

The present disclosure will be described with respect to particular embodiments and with reference to certain drawings but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the disclosure described herein can operate in other orientations than described or illustrated herein.

Furthermore, the various embodiments, although referred to as "preferred" are to be construed as exemplary manners in which the disclosure may be implemented rather than as limiting the scope of the disclosure.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present disclosure, the only enumerated components of the device are A and B, and further the claim should be interpreted as including equivalents of those components.

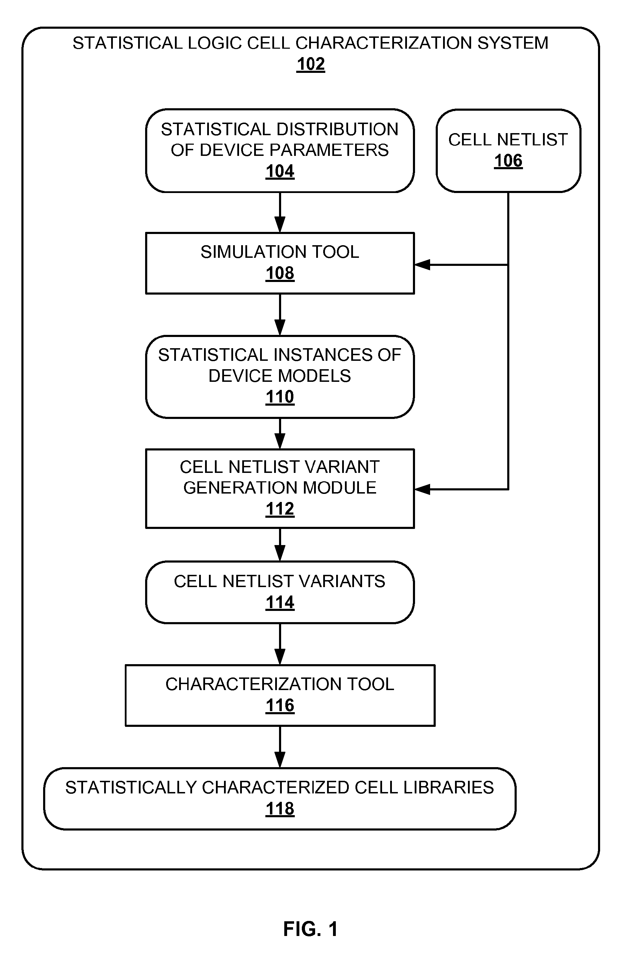

Referring to FIG. 1, a statistical logic cell characterization system 102 (hereinafter, 'system 102') is disclosed.

The system 102 includes a simulation tool 108 which generates statistical instances of device models 110 using statistical distribution of device parameters 104. The statistical distribution of device parameters 104 is usually obtained from a physical design kit. The physical design kit (PDK) is generated and supplied by semiconductor device manufacturers or better known as foundries. The PDK may have variations based on a particular foundry which had generated the PDK. The PDK includes statistical compact models of semiconductor devices, for example, N-type transistors, P-type transistors, diodes and the like. The semiconductor device models supplied by the foundry may include pre-defined device models for defined process corners, for example, slow, fast, typical, maximum leakage and the like, and internal statistical distributions of device parameter sets.

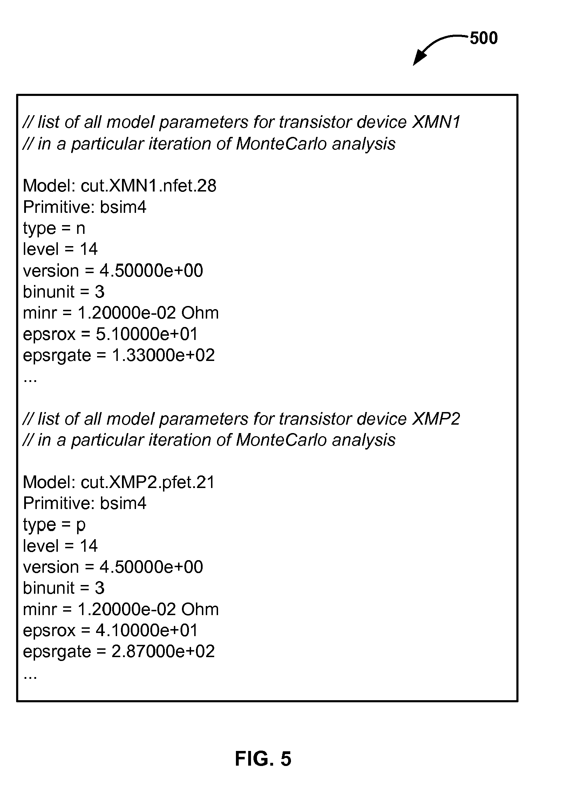

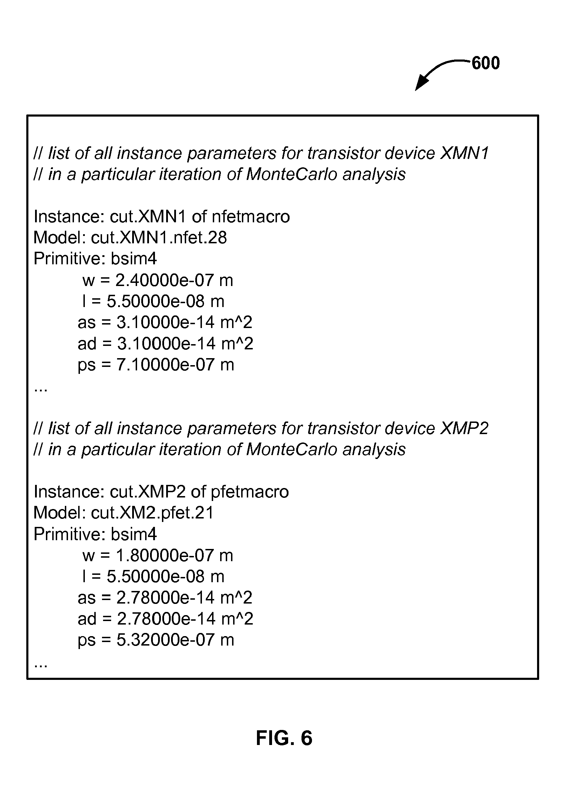

The simulation tool 108 is run, for example, in a Monte Carlo analysis mode to generate statistical device models 110. The generated statistical device models 110 are stored as a report file containing instance parameters of the devices and a report file containing model parameters of the devices. The simulation tool 108 reads statistical distribution of device parameters 104 and outputs statistical device models 110 while running in a loop without actually perform any circuit simulation. An example of the output report file containing instance parameters of the devices is illustrated in FIG. 6 and an example of the output report file containing model parameters of the devices are device model files is illustrated in FIG. 5. In one embodiment of the present disclosure, the simulation tool 108 may be a part of an existing general purpose circuit simulator, such as, SPECTRE by CADENCE. In a different embodiment, when the statistical distributions of device parameters 108 are stored in human readable format, it is possible to perform a direct evaluation of stored parameter relations and functions.

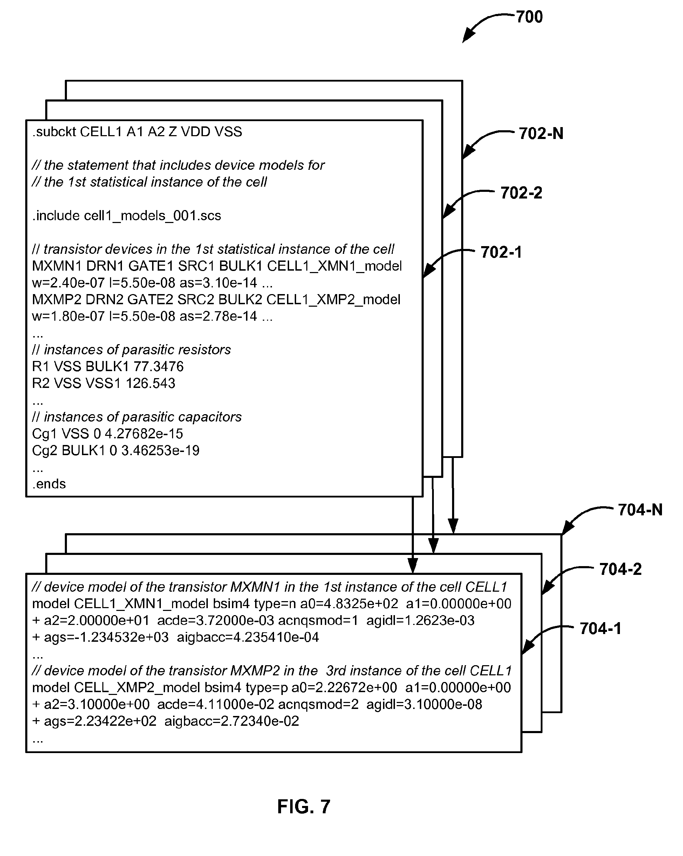

The system 102 further includes a cell netlist variant generation module 112 which generates cell netlist variants 114 using the statistical device models 110 and a cell netlist 106. The cell netlist variant generation module 112 creates N instances of the cell netlist and connects each cell netlist instance with the corresponding cell model file, thereby generating N variants of the cell netlist 106. The cell model files are generated using the statistical device models 110. One example of the N variants of the cell netlist 106 is illustrated in FIG. 7, where N instances of the cell netlist 702-1 through 702-N are linked to respective cell model instances 704-1 through 704-N. In one embodiment, the cell netlist variant generation module 112 may be a part of the characterization tool 116. In another embodiment, the cell netlist variant generation module 112 may be a part of the simulation tool 108.

The system 102 includes a characterization tool 116 for characterizing the cell netlist variants 114 thereby generating statistically characterized cell libraries 118. One example of such a library characterization tool is ALTOS LIBERATE by CADENCE. In one embodiment, the characterization tool 116 is a non-statistical characterization tool. The characterization tool 116 is used to perform cell characterization using multiple statistical instances of the cell netlist rather than using a single cell netlist with multiple statistical instances of the device model. Each statistical instance of the cell netlist includes devices with unique parameter sets thus generating cell netlist variants 114. Thus, distributions of timing values are obtained by performing multiple characterization runs of the statistical cell instances using a standard non-statistical cell characterization tool.

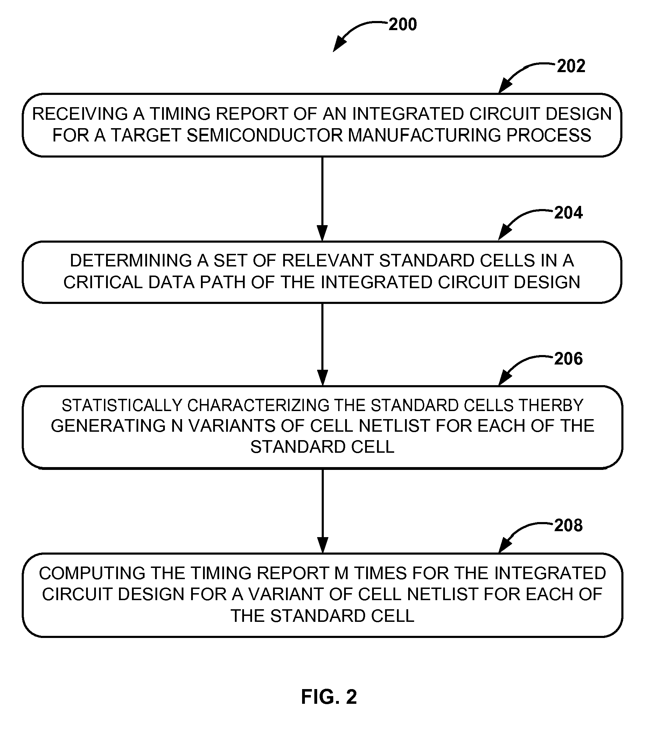

FIG. 2 shows a flow diagram of a method 200 for characterizing variability of an integrated circuit design in a target semiconductor manufacturing process. The method begins at step 202, wherein a timing report of the integrated circuit design is received. The timing report is obtained from an existing description of the integrated circuit design. The existing description may be obtained from synthesis of the integrated circuit design in the target semiconductor manufacturing process.

At step 204, a set of relevant standard cells is determined based on the timing report. In one embodiment, the relevancy of a cell is based on its occurrence in a critical data path of the integrated circuit design. In one embodiment, a data path of the integrated circuit design is critical with respect to time.

At step 206, each standard cell of the set of relevant standard cells is statistically characterized. Each cell of the set of relevant standard cells has a cell netlist. The cell netlist provides connectivity information and values of some parameters of devices present in the cell. As per the present disclosure, N variants of the cell netlist of a cell are created, wherein N is a natural number. In one embodiment, N may be in the range of 100 to 300. N may be selected based upon desired accuracy of cell statistical behaviour and time required for the statistical characterization step. In an embodiment, N may be chosen as a function of or adapted to the variability conditions of the target manufacturing process. In one embodiment, N is in the range of 100 to 300. In another embodiment, N is in the range of 150 to 250. In yet another embodiment, N is 200.

A variant of the cell netlist is obtained from an instance of the cell netlist by applying a statistical instance of a model of devices in the cell. In one embodiment, device parameters are statistically varied to take local or global device variability within the cell into account. Further, predetermined variability conditions, e.g. a PVT point, which are chosen in function of the target manufacturing process and which determine the statistic variation of the transistor parameters are also taken into account for statistical characterization. In one embodiment, different instances of the transistor parameters are selected for different transistors of the same standard cell.

Output of step 206 represents statistical instances of standard cell library taking local or global variability into account. In embodiments of the method of this disclosure, these statistical instances of a standard cell library may be provided in an industry standard format, for example, the Liberty format.

At step 208, the received timing report is recalculated at least N times wherein for each cell of the relevant standard cells; a different variant of its cell netlist is used. In case of a global process variability simulation, M may be equal to N, meaning that each variant is preferably used once, because there are only N possible instances of circuit design (represented by a timing report) for global variability. In case of local process variability simulation, M is preferably a much larger than N, meaning that each variant is used multiple times, because there are many more possible timing report statistical recalculations due to the variation of transistor instances within the cells. In one embodiment, M be equal to at least N. In another embodiment, M may be a multiple of N (for example, 2N, 3N). In one example embodiment, M may be in the range of 100 to 300. In another example embodiment, N may be in the range of 150 to 250. In yet another embodiment, N may be 200. For each said recalculation, an initial step of creating a statistical instance of a standard cell library in an industry standard format is performed. In one embodiment, for each of the relevant standard cells the entry for the respective standard cell is modified on the basis of said selected one of said N variants of the respective cell netlist of that cell. In one embodiment, the statistical instance of the standard cell library is applied to a non-statistical static timing analysis tool.

The result of the timing report recalculations gives a statistical distribution of the timing of the circuit in which variability has been taken into account. By this method, the need for a complete statistical characterization of all the cells in the circuit can be avoided and a faster and more computationally efficient method can be achieved which gives nonetheless a result with sufficient accuracy.

The method of the present disclosure has the advantage that existing tools for static timing analysis, which take the industry standard format libraries as input but are not arranged for statistical characterisation of circuits, can nevertheless be used for statistically characterizing an integrated circuit design to take variability into account.

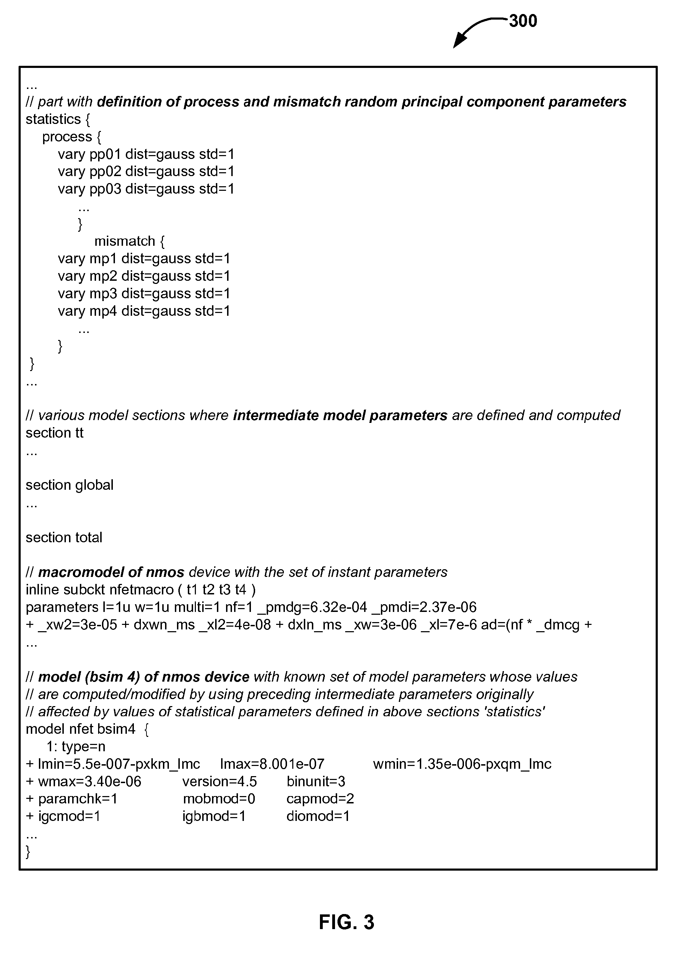

FIG. 3 shows a statistical compact model file 300 according to one embodiment of the present disclosure. The model file 300 is created and supplied by the semiconductor device manufacturers. The model file 300 includes definition of process and mismatch random principal component parameters and their statistics. The model file 300 further includes definition and instructions for computing intermediate model parameters. The model file 300 is used to generate statistical instances of a device model. One statistical instance of the model is included in a variant of the cell netlist. A person skilled in the art will appreciate that in FIG. 3 only part of the information actually present in the model file 300 is shown, for the purpose of explaining the present disclosure.

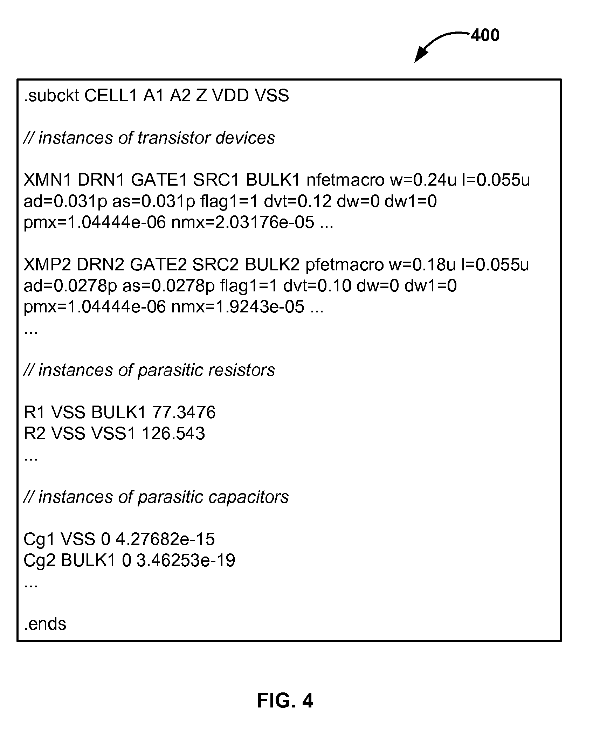

FIG. 4 shows a cell netlist 400 in accordance to one embodiment of the present disclosure. The cell netlist 400 represents netlist after place and route stage of the integrated circuit design process. The cell netlist 400 includes description of device instances and extracted parasitic resistors and capacitors. A person skilled in the art will appreciate that in FIG. 4 only part of the information actually present in a cell netlist 400 is shown, for the purpose of explaining the present disclosure.

FIG. 5 shows a file 500 having lists of model parameters of devices in the cell to be characterized. For example, the file shows model parameters for a transistor device XMN1. The model parameters include, but are not limited to, MINR, EPSROX, and EPSRGATE. MINR is minimum source/drain resistance. EPSROX and EPSRGATE represent dielectric constant of the gate oxide and gate relative to vacuum, respectively for the transistor device XMN1. Similarly, model parameters are defined for a second transistor device XMP2 described in the file. A person skilled in the art will appreciate that there are many other model parameters which may be used in practice and that only a small portion of actual file is shown, sufficient for the purpose of explaining the present disclosure. Further, a person skilled in the art will appreciate that there may be many devices in a cell netlist and only two devices are shown here for illustration purposes.

FIG. 6 shows a file 600 having lists of instance parameters of devices in the cell to be characterized. For example, the file 600 shows instance parameters and their values for a given statistical instance for a transistor device XMN1 corresponding to model parameters of FIG.3C. The instance parameters include but not limited to W, L, AS, AD, and PS. W is a default channel width of the transistor device XMN1. L is a default channel length of the transistor device XMN1. AS is an area of source diffusion and AD is an area of drain diffusion. PS is a perimeter of source diffusion. Similarly, values for the instance parameters at a given statistical instance are output for a second transistor device XMP2 described in the file. A person skilled in the art will appreciate that there are many other instance parameters which may be used in practice and that only a small portion of the actual file is shown, sufficient for the purpose of explaining the present disclosure.

FIG. 7 shows N statistical variants of the cell netlist 702-1 through 702-N and N statistical device models 704-1 to 704-N for the integrated circuit design according to an embodiment of the present disclosure. As shown, each instance of the cell netlist is associated with a corresponding instance of the model file, for example, the cell netlist variant 702-1 is associated with the model file instance 704-1, and so on. The cell netlist variants 702-1 through 702-N are generated by combining a statistical device model instance with an instance of the cell netlist.

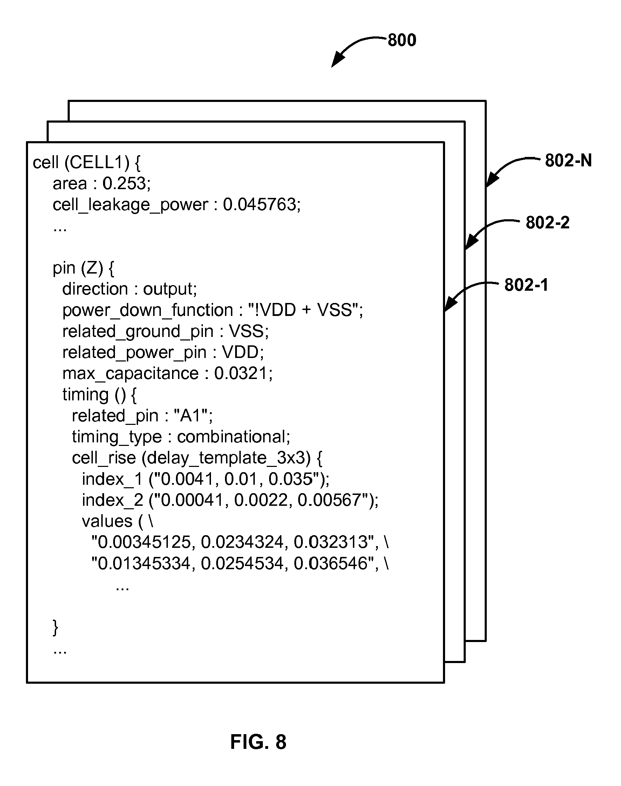

FIG. 8 shows, in an exemplary embodiment of the present disclosure, statistically characterized standard library files 800. The library files 800 include a statistical set of N standard cell libraries. The statistical set includes cell libraries 802-1 through 802-N. Each cell library of the set includes instances of all characterized standard cells. The cell library may be in any suitable format, proprietary or open standard, known in the art. In one embodiment, the cell library is in (.lib) liberty file format. Cell library 802-1 includes, but not limited to, timing and power characteristics of a first instance of the standard cell. Similarly, other cell libraries include timing and power characteristics when input model and/or instance parameters are statistically varied for the same standard cell. Therefore, output 800 represents statistical distribution of timing and power data for each cell of the set of relevant standard cells which have been characterized. The statistical distribution of timing and power data takes into account local or global variability within a cell.

The present disclosure provides several advantages and overcomes limitations of existing system(s) for statistical characterization of logic cells of an integrated circuit design.

With the present disclosure a user has a full control over statistical sampling of statistical compact model file by choosing N appropriately. The user can easily implement any kind of importance sampling method (as well as the basic Monte Carlo method) if the tails of the distribution are of primary interest. The user also controls the number of generated statistical instances and can make a trade-off between an accuracy of cell statistical behavior and time spent in cell instance characterization.

This way the user can run statistical cell characterization by using a non-statistical cell characterization tool with full accuracy of statistical compact model provided by silicon technology manufacturer. The user has complete control over the generation of the distributions of timing and power data that are contained within the multiple statistical liberty files and can choose to have increased accuracy or reduced simulation time.

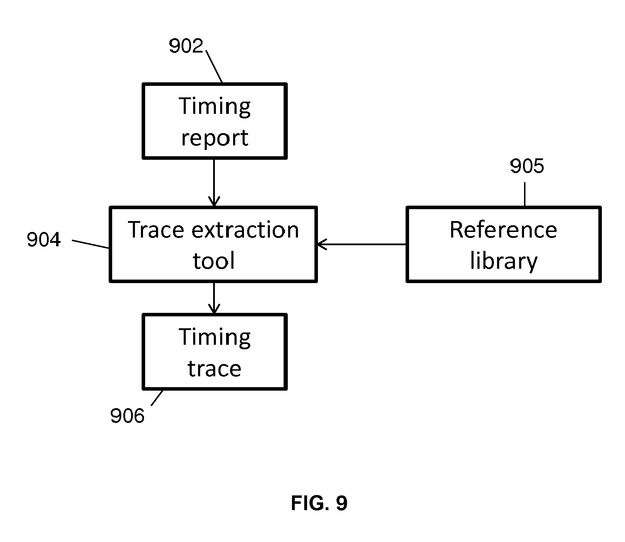

Below, with reference to FIG. 9-14, an embodiment of recalculation of the timing report of the integrated circuit design will be described, which takes the statistically characterized standard cell libraries in the .lib format as input. In this embodiment, first the timing report is "functionalized" and next the statistically characterized standard cell libraries are applied to the functionalized timing trace(s).

Fig. 9 shows an overview of the conversion of a timing report 902 into a functionalized timing trace using a "trace extraction tool" 904. The tool 904 reads in the timing report 902 text file and the library 905 used to create the report (the reference library 905) is imported into the tool. In embodiments of this disclosure, this library format, which may be an industry standard format, is exploited to provide statistically varied instances of such libraries, in which the information of relevant cells is statistically varied, to the functionalized timing trace, to quickly obtain an idea of the impact of variability on the timing.

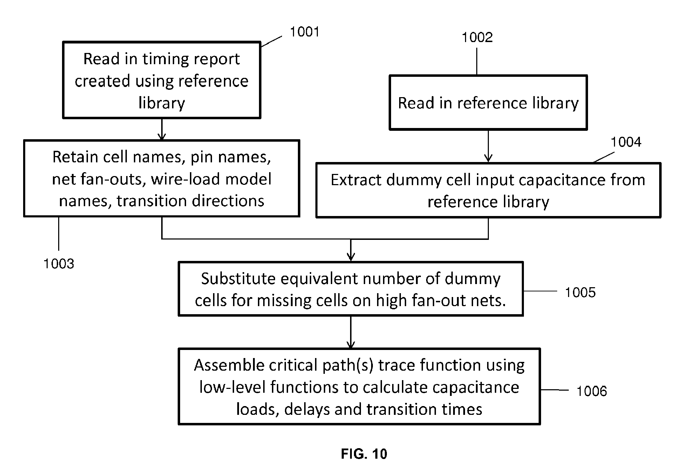

Fig. 10 shows the internal modules of the trace extraction tool. Modules 1001 and 1002 perform the read-in of the timing report and reference library, respectively. Module 1003 parses through the timing report information and retains information relating to wire-load models, cell names, pin names, net fan-outs and signal transition directions (rising or falling) are stored. In addition, Module 1003 also retains load capacitance values for use in the Module 1005 for estimating the missing information in the timing report on the input capacitances of cells terminating high fan-out nets.

Modules 1002, 1004, and 1005 may be used to enhance accuracy. The timing report only specifies cell names which lie directly on the data path. This is not a problem when cells are connected point-to-point by nets with no branches (that is, which have a fan-out of one). When nets have a fan-out greater than one, branches of the direct net split off from the timing path and are terminated by unspecified cell input capacitances. This is not a problem for the timing report as only the total load capacitance is required for timing analysis.

The functionalized timing trace implements an active timing report by means of which the total load capacitance for each stage in the timing path can be calculated on the basis of the files in the library. Since the library contains wire-load models, the net capacitance for a given fan-out can be calculated. The total load capacitance is the sum of the net capacitance and the input capacitances of the unspecified terminating cells.

Module 1005 computes the termination capacitance for cells located on off-path net branches by first calculating the net capacitance from the wire-load model specified in the timing report as a function of its fan-out. This net capacitance and the known capacitance of the cell lying in the timing path are then subtracted from the total capacitance in the timing report to leave the total missing cell termination capacitance. Module 1005 then converts this missing termination capacitance into the capacitance associated with an equivalent number of dummy drive-strength 1 inverters from the reference library, using information provided by Module 1004. In this way, the numerical value of the total off timing path termination capacitance is converted into an equivalent number of inverter input capacitances which can be re-calculated for each new library given as an input argument to the trace.

Module 1005 implements one way to take into consideration that there is an off data path termination load capacitance at the nets having a fan-out greater than one. Other examples are to use a predetermined, greater capacitance value for such nets than for nets having a fan-out of one, or to use an equivalent multiple (i.e. the multiple being chosen in function of the fan-out) of the input capacitance of the standard cell which is immediately subsequent to the considered net.

Finally, Module 1006 reconstructs the timing path and inserts low level functions to re-calculate load capacitances and timing data for each stage.

The timing report 902 is not restricted to displaying the slowest timing path in the design. The synthesis tool can be instructed to write out the N slowest paths in the design, N being for example 100 or more up to 1000. Normally, this is not done as it is only the slowest path (termed the critical path) that determines the clock rate of the design. However, when a functionalized timing trace 306 is used with a different (target) library than the (reference) library used in its construction, it is possible that the slowest path is different from the slowest path in the reference technology. Therefore, in preferred embodiments, traces are constructed from the N slowest paths obtained from the reference library timing report. The delays through all N paths are computed and the maximum delay selected as the critical path delay. The choice of N is a trade-off between calculation speed and delay path coverage. We have found the N=100 produces satisfactory coverage and calculation times measured in seconds.

The standard cell libraries which are known in the art may represent data files which may contain timing, power and area information for the logic cells implemented in a specific technology node, node option and process corner used for the implementation of the design in silicon. In embodiments of this disclosure, the same format of standard cell library is used to provide a set of statistically characterized standard cell libraries. This set of statistically characterized standard cell libraries includes statistical distributions of delay values and capacitance values of standard cells determined by statistical characterization of the respective standard cells in the target semiconductor manufacturing process to take transistor variability into account. This set of statistically characterized standard cell libraries is an embodiment, according to this disclosure, to provide the substitute semiconductor process dependent information.

In embodiments of this disclosure, this is done as follows: for each functionalized timing trace, sequentially applying each of said set of statistically characterized standard cell libraries as input to a processing device or evaluation tool configured for evaluating said functionalized timing trace and each time determining a cumulative delay therefrom. The resulting combination of cumulative delays forms an embodiment of the path delay statistical distribution as defined herein.

The processing device can thus determine a path delay statistical distribution for each said functionalized timing trace in a target semiconductor manufacturing process, by applying substitute semiconductor manufacturing process dependent design information to said functionalized timing trace. The substitute semiconductor manufacturing process dependent design information may include statistical distributions of delay values for the standard cells in the respective data path, and statistical distributions of capacitance values for the standard cells and nets in the respective data path. The statistical distributions of the delay values and the capacitance values may be determined by statistical characterization of the respective standard cells in the target semiconductor manufacturing process to take transistor variability into account. For nets having a fan-out greater than one an off data path termination load capacitance is considered, as this has been embedded in the functionalized timing trace.

In embodiments of this disclosure, the set of statistically characterized standard cell libraries may include statistical distributions of delay values of all possible standard cells and statistical distributions of capacitance values of said all possible standard cells and interconnecting nets, statistically characterized in the target semiconductor manufacturing process to take transistor variability into account. In alternative embodiments, the substitute information may also be provided in other ways, such as for example by providing only substitute information for the standard cells in the data paths that are determined to be relevant to recalculate the timing of the design. In such embodiments, the substitute information may contain only statistical distributions of delay values for the standard cells in the respective data path and statistical distributions of capacitance values for the standard cells and nets in the respective data path. A way of implementing such an embodiment which nonetheless makes use of an industry standard library format is described further herein.

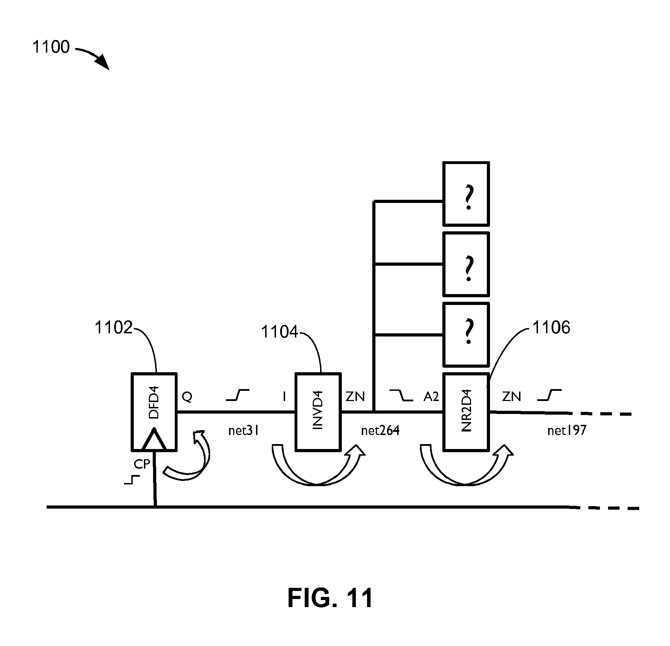

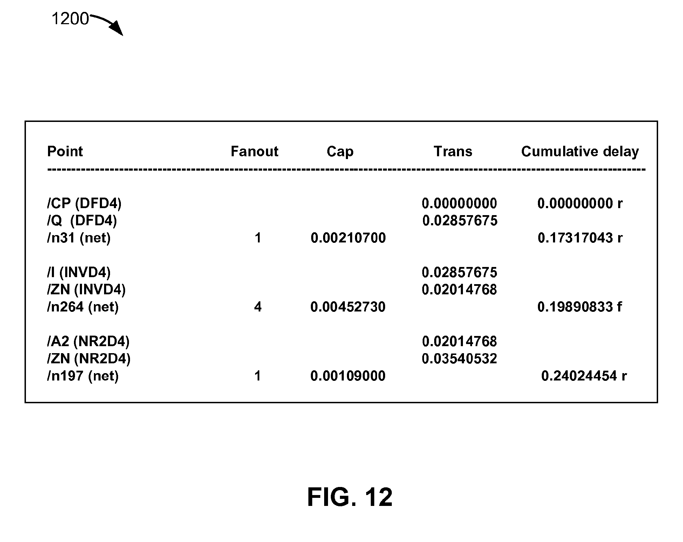

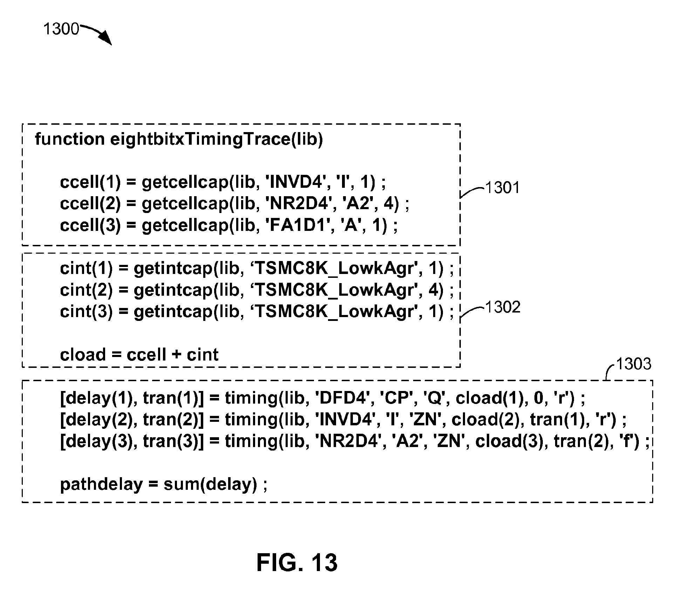

Fig. 11 schematically shows part of an exemplary 8-bit multiplier circuit design 1100. In one example implementation, a critical path of the 8-bit multiplier circuit 1100 may be identified to be a path formed by components a D flip-flop (DFD4) 1102, an inverter (INVD4) 1104, and a NOR (NR2D4) 1106. An relevant part of a timing report 1200 for the critical path is shown in Fig. 12. The timing report 800 indicates the slowest data path through the circuit (which defines the clock rate of the design) starting with a step input signal (a transition time of zero) at the clock pin (CP) of the DFD4 1102. The signal then appears at the output pin (Q) of the D flip-flop with a rise time of 0.0285 ns and travels along a net with a fan-out of one and a total capacitance of 0.0021 pF and arrives at the input pin (I) of the INVD4 1104 after a delay of 0.17 ns. Further, the signal passes through the input pin (I) with a rise time of 0.285 ns and travels along a net with a fan-out of four and a total capacitance of 0.0045 pF and arrives at output pin (ZN). The signal arrives at an input pin (A2) of clocked NR2D4 1106 after a delay of 0.19 ns. The trace implementation of the timing report 1200 shown in Fig. 12 is shown in Fig. 13. The timing trace is written in functional form and can take a standard cell library as an input argument, indicated by the variable 'lib' in first line.

So Fig. 13 shows an exemplary trace implementation 1300 of the timing report 1200 for the critical path of the 8-bit multiplier circuit design described above. Fig. 13 illustrates a section 1301 that the trace receives an input argument which is a standard cell library 'lib'. This may be a library of any technology option that can be evaluated. The recalculation of the input capacitances of the cells is shown in timing path using a low-level function 'getcellcap'. The getcellcap function may takes the library and cell names as input arguments, as well as the name of the input pin. The last argument represents a multiplication factor which is not utilized in this section and is set to one.

Section 1302 uses the low-level function 'getintcap' to recalculate net capacitances from using the wire-load model contained in the standard library cells contained in the library as a function of the fan-out of the net. As described above, the first three nets specified have fan-outs of 1, 4 and 1, respectively. The computation is performed using statistical distributions of delay values for the standard cells in the respective data path, and statistical distributions of capacitance values for the standard cells and nets in the corresponding data path.

Section 1303 re-assembles the critical path using the data calculated in section 1 through 2 using another low-level function called 'timing'. This function emulates the statistical static timing analysis routines in the synthesizer unit and takes the statistical standard cell library as input arguments. For each timing trace, a corresponding set of statistically characterized standard cell libraries are sequentially applying as input to determine a cumulative delay. The resulting combination of cumulative delays is obtained which forms the path delay statistical distribution.

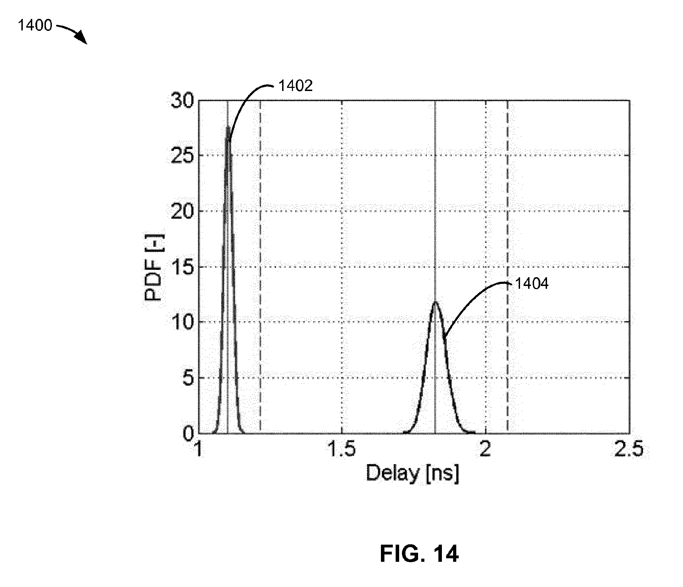

The technique for SSTA proposed in this example uses multiple statistical instances of standard cell libraries generated by a commercial library characterization tool as input arguments for a timing trace. To obtain a valid statistical sample of the corresponding distribution of critical path delays, the number of statistical instances of a library may be around 50 or greater. While such number of statistical instances would represent a huge computational task if each cell in the library had to be re-characterized 50 times for global and local variability. The fact that the trace only uses limited cells to perform statistically timing characterization by limiting them to only those cells contained in the delays paths in the timing trace makes the approach feasible. Fig. 14 shows the distribution of critical path delays 1400, expressed as probability density functions, generated by the DSP timing trace from 50 statistical instances of a 28nm HPM SS library characterized at a temperature of 0V and supply voltages of Vdd=0.81 V (curve 1402) and Vdd=0.72V (curve 1404), for the above-described multiplier circuit.

The advantage is that very few cells need to be statistically characterized to assess critical path variability. This can result in significant speed-up of computation.

## Claims

1. A method for characterizing the variability of a given integrated circuit design in a target semiconductor manufacturing process, the method comprising:
a) providing a timing report of said integrated circuit design from an existing description of said integrated circuit design, said existing description resulting from synthesis of said integrated circuit design in said target semiconductor manufacturing process;
b) determining, on the basis of said timing report, a set of relevant standard cells in at least one critical data path of said existing integrated circuit design;
c) statistically characterising only the relevant standard cells, thereby generating for each relevant standard cell a first statistically relevant number N of variants of its cell netlist;
d) recalculating said timing report of said integrated circuit design at least a second statistically relevant number M times, wherein, for each said recalculation, for each of the relevant standard cells a different one of said N variants of the respective cell netlist of that cell is selected.

2. The method of claim 1, wherein for said statistical characterisation of step c use is made of:
a cell netlist of the respective standard cell that is being characterised, said cell netlist being taken from said timing report;
transistor models of transistors in the respective standard cell, wherein parameters can be statistically varied to take variability into account; and
predetermined variability conditions which are chosen in function of the target manufacturing process and which determine the statistic variation of the transistor parameters.

3. The method of claim 2, wherein for different transistors of the same standard cell different instances of the transistor parameters are selected.

4. The method of any one of the preceding claims, wherein the recalculation in step d comprises, for each said recalculation, an initial step of creating a statistical instance of a standard cell library in an industry standard format, wherein for each of the relevant standard cells the entry for the respective standard cell is modified on the basis of said selected one of said N variants of the respective cell netlist of that cell; and a subsequent step of applying said statistical instance of the standard cell library to a non-statistical static timing analysis tool.

5. The method of any one of the preceding claims, wherein N is in the range of 100 to 300, preferably 150 to 250, more preferably 200.

6. The method of any one of the preceding claims, wherein M is in the range of 100 to 300, preferably 150 to 250, more preferably 200.

7. The method of any one of the preceding claims, wherein M is at least N.

8. The method of any one of the preceding claims, wherein M is a multiple of N.

9. A system for characterizing the variability of a given integrated circuit design in a target semiconductor manufacturing process, the system comprising:
an input device, arranged for providing a timing report of said integrated circuit design from an existing description of said integrated circuit design, said existing description resulting from synthesis of said integrated circuit design in said target semiconductor manufacturing process;
a processing system, communicatively connectable to said input device, said processing system being arranged for:
determining, on the basis of said timing report, a set of relevant standard cells in at least one critical data path of said existing integrated circuit design;
statistically characterising only the relevant standard cells, thereby generating for each relevant standard cell a first statistically relevant number N of variants of its cell netlist; and
recalculating said timing report of said integrated circuit design at least a second statistically relevant number M times, wherein, for each said recalculation, for each of the relevant standard cells a different one of said N variants of the respective cell netlist of that cell is selected.

10. The system of claim 9, wherein said input device is arranged for providing the following information to said processing system:
a cell netlist of the respective standard cell that is being characterised, said cell netlist being taken from said timing report;
transistor models of transistors in the respective standard cell, wherein parameters can be statistically varied to take variability into account; and
predetermined variability conditions which are chosen in function of the target manufacturing process and which determine the statistic variation of the transistor parameters;
and wherein said processing system is arranged for using said information upon statistically characterising the relevant standard cells.

11. The system of claim 9 or 10, wherein said processing system is arranged for performing said recalculations of said timing report as follows:
performing, for each said recalculation, an initial step of creating a statistical instance of a standard cell library in an industry standard format, wherein for each of the relevant standard cells the entry for the respective standard cell is modified on the basis of said selected one of said N variants of the respective cell netlist of that cell; and
a subsequent step of applying said statistical instance of the standard cell library to a non-statistical static timing analysis tool.

12. Computer program product directly loadable into a memory of a computing device, comprising software code portions for performing the steps of the method of any one of the claims 1-8 when executed on said computing device.

13. Computer readable non-volatile storage medium containing the computer program product according to claim 12.
